(19) Europäisches Patentamt / European Patent Office / Office européen des brevets

(11) **EP 2 769 448 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(51) Int Cl.:
***H02J 3/26*** *(2006.01)*    ***H02J 3/38*** *(2006.01)*

(21) Anmeldenummer: **12784480.1**

(22) Anmeldetag: **10.10.2012**

(86) Internationale Anmeldenummer:
**PCT/EP2012/070089**

(87) Internationale Veröffentlichungsnummer:
**WO 2013/057028 (25.04.2013 Gazette 2013/17)**

(54) **VERFAHREN ZUM EINSPEISEN ELEKTRISCHEN STROMS IN EIN ELEKTRISCHES NETZ**

METHOD FOR FEEDING ELECTRICAL CURRENT INTO A POWER GRID

PROCÉDÉ D'ALIMENTATER UN RÉSEAU EN CURRANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **20.10.2011 DE 102011084910**

(43) Veröffentlichungstag der Anmeldung:
**27.08.2014 Patentblatt 2014/35**

(60) Teilanmeldung:
**14176502.4 / 2 806 523**

(73) Patentinhaber: **Wobben Properties GmbH**
**26607 Aurich (DE)**

(72) Erfinder:
• DIEDRICHS, Volker
  18209 Bad Doberan (DE)
• BEEKMANN, Alfred
  26639 Wiesmoor (DE)

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2010/028689    WO-A2-2012/031992
DE-A1-102007 005 165    JP-A- 2004 180 363
US-A1- 2004 100 247

• GOMIS-BELLMUNT O ET AL: "Ride-Through Control of a Doubly Fed Induction Generator Under Unbalanced Voltage Sags", IEEE TRANSACTIONS ON ENERGY CONVERSION, IEEE SERVICE CENTER, PISCATAWAY, NJ, US, vol. 21, no. 4, 1 December 2008 (2008-12-01), pages 1036-1045, XP011238313, ISSN: 0885-8969
• YI ZHOU ET AL: "Operation of Grid-Connected DFIG Under Unbalanced Grid Voltage Condition", IEEE TRANSACTIONS ON ENERGY CONVERSION, IEEE SERVICE CENTER, PISCATAWAY, NJ, US, vol. 24, no. 1, 1 March 2009 (2009-03-01), pages 240-246, XP011250563, ISSN: 0885-8969
• SONG XIAN-WEN ET AL: "Dual reference frame scheme for distributed generation grid-connected inverter under unbalanced grid voltage conditions", POWER ELECTRONICS SPECIALISTS CONFERENCE, 2008. PESC 2008. IEEE, IEEE, PISCATAWAY, NJ, USA, 15 June 2008 (2008-06-15), pages 4552-4555, XP031300669, ISBN: 978-1-4244-1667-7

EP 2 769 448 B1

**Beschreibung**

Die vorliegende Erfindung betrifft ein Verfahren und eine Vorrichtung zum Einspeisen elektrischen Stroms in ein elektrisches Dreiphasennetz. Außerdem betrifft die vorliegende Erfindung eine Windenergieanlage, die zum Einspeisen elektrischen Stroms in ein dreiphasiges Netz vorbereitet ist.

Verfahren und Vorrichtungen zum Einspeisen elektrischen Stroms in ein elektrisches dreiphasiges Netz wie beispielsweise das europäische Verbundnetz bzw. in einen Teil davon sind allgemein bekannt. Großkraftwerke verwenden hierfür einen Synchrongenerator, der unmittelbar an das elektrische Netz angeschlossen ist. Der Synchrongenerator wird hierfür mit einer entsprechenden Drehzahl betrieben, die genau auf die Frequenz des elektrischen Netzes abgestimmt ist. je nach Bauform des Synchrongenerators beträgt die Drehzahl z. B. 1500 Umdrehungen pro Minute bei einem vierpoligen Synchrongenerator, der an ein Netz mit einer Frequenz von 50Hz angeschlossen ist. Treten Störungen im Netz auf, wie beispielsweise eine unsymmetrische Belastung des Netzes bei der beispielsweise eine der drei Netzphasen stärker belastet wird, hat dies unmittelbar Auswirkung auf den vom Synchrongenerator gelieferten Strom. Das physikalisch bedingte Verhalten des Synchrongenerators kann hierbei zumindest teilweise wieder zu einer Symmetrierung des Netzes beitragen. Die Art und Weise eines solchen Beitrages des Synchrongenerators kann aber aufgrund der starren Kopplung mit dem Netz in Grunde nicht beeinflusst werden.

Windenergieanlagen sind noch in den 90iger Jahren im wesentlichen in dem Sinne passiv an das Netz angeschlossen gewesen, dass sie soviel Energie in das Netz einspeisen, wie aufgrund der vorherrschenden Windbedingungen jeweils aktuell möglich ist. Ende der 90iger Jahre wurde erstmals erkannt, dass auch Windenergieanlagen zur elektrischen Stützung des Netzes einen Beitrag leisten können. So beschreibt beispielsweise die deutsche Patentanmeldung DE 100 22 974 A1 ein Verfahren, bei dem Windenergieanlagen abhängig von der Netzfrequenz ihre Leistungseinspeisung ändern, insbesondere drosseln können. Die DE 101 19 624 A1 schlägt vor, dass im Falle einer Netzstörung, nämlich insbesondere im Falle eines Kurzschlusses eine Windenergieanlage den Strom, den sie einspeist begrenzt, statt sich vom Netz zu trennen, um auch hierdurch eine Netzstützung zu erreichen. Aus der WO 02/086315 A1 wird zur Netzstützung durch eine Windenergieanlage ein Verfahren beschrieben, das in Abhängigkeit der Netzspannung einen Phasenwinkel des eingespeisten Stroms einstellt und damit spannungsabhängig Blindleistung in das Netz einspeist um hierdurch das Netz zu stützen. Die DE 197 56 777 A1 betrifft ebenfalls ein Verfahren zur Netzstützung mittels einer Windenergieanlage, bei dem die Windenergieanlage gegebenenfalls abhängig von der Netzspannung die ins Netz einzuspeisende Leistung reduziert, um hierdurch insbesondere eine Trennung vom Netz zu vermeiden, um auch hierdurch eine Stützung des Netzes durch eine Windenergieanlage zu erreichen.

Windenergieanlagen gewinnen zunehmend an Bedeutung. Auch hinsichtlich einer Netzstützung gewinnen sie zunehmend an Bedeutung. Die oben beschriebenen Maßnahmen zur Netzstützung - die man wohl als Pionierschritte bezeichnen kann - sind dabei aber insoweit noch verbesserbar, dass auch Netzunsymmetrien berücksichtigt werden.

Die Berücksichtigung von Netzunsymmetrien weist dabei einige Probleme auf. Zunächst ist es problematisch, Netzunsymmetrien schnell und genau zu erfassen. Weiterhin stellt sich das Problem im Falle einer Erfassung von Unsymmetrien, diese gezielt auszugleichen, was mit einem stark gekoppelten Synchrongenerator nicht oder nur bedingt möglich ist. Gleiche Probleme treten auf bei Systemen, die keinen Synchrongenerator verwenden, sondern einen solchen dem Verhalten nach nachbilden.

Als Stand der Technik sei noch allgemein auf das Dokument WO 2010/028689 A1 verwiesen, welches sich auf eine Windenergieanlage mit doppelt gespeister Asynchronmaschine bezieht. Auch das Dokument DE 10 2007 005 165 A1 betrifft ein Verfahren zur Stromeinspeisung mit einem doppelt gespeisten Asynchrongenerator, bei dem zur Veränderung einer Störung wenigstens ein Anteil eines Betrags einer Gegensystemkomponente in das Elektrizitätsnetz eingespeist wird.

Ein gattungsgemäßes Verfahren ist des Weiteren aus der folgenden Druckschrift bekannt:

SONG XIAN-WEN ET AL: "Dual reference frame scheme for distributed generation grid-connected inverter under unbalanced grid voltage conditions",POWER ELECTRONICS SPECIALISTS CONFERENCE, 2008. PESC 2008. IEEE, IEEE, PISCATAWAY, NJ, USA, 15. Juni 2008 (2008-06-15), Seiten 4552-4555, XP031300669,ISBN: 978-1-4244-1667-7

Der vorliegenden Erfindung liegt somit die Aufgabe zugrunde, wenigstens eins der oben genannten Probleme zu lösen oder zu verringern. Insbesondere soll eine Lösung geschaffen werden, bei der gezielt unsymmetrisch in das Netz eingespeist werden soll, um im Netz vorhandenen Unsymmetrien zu begegnen. Zumindest soll eine alternative Lösung geschaffen werden.

Erfindungsgemäß wird ein Verfahren nach Anspruch 1 vorgeschlagen.

Entsprechend wird ein Verfahren vorgeschlagen zum Einspeisen elektrischen Stroms in ein elektrisches, dreiphasiges Netz mit einer ersten, zweiten und dritten Phase mit einer ersten, zweiten und dritten Spannung mit einer Netzfrequenz. Das Verfahren geht somit von einem dreiphasigen System mit einer Frequenz, nämlich der Netzfrequenz, aus, bei dem jede Phase eine eigene Spannung aufweist, die sich von den Spannungen der anderen Phasen unterscheiden kann. Das Verfahren berücksichtigt somit insbesondere auch ein unsymmetrisches Dreiphasensystem.

Gemäß einem Schritt wird die erste, zweite und dritte Spannung gemessen und die Spannungen werden in ein Spannungs-Mitsystem und ein Spannungs-Gegensystem nach der Methode der symmetrischen Komponenten transformiert. Das dreiphasige Spannungssystem kann somit trotz Berücksichtigung von Unsymmetrien auf einfache und allgemeine Weise beschrieben werden. Es wird davon ausgegangen, dass nur drei Leitungen, die üblicherweise als L1, L2 und L3 bezeichnet werden, Strom führen und somit ein Nullsystem nicht vorliegt bzw. zur Beschreibung nicht benötigt wird, sondern eine Beschreibung durch Spannungs-Mitsystem und Spannungs-Gegensystem ausreicht.

Es erfolgt weiterhin ein Berechnen eines ersten, zweiten und dritten Sollstroms zum Einspeisen in die erste, zweite bzw. dritte Phase des Netzes. Es wird darauf hingewiesen, dass das Vorsehen und Einspeisen eines solchen ersten, zweiten und dritten Stromes - die drei Ströme können auch zusammen als dreiphasiger Strom bezeichnet werden - grundsätzlich und wesentlich von dem Generieren eines dreiphasigen Stroms zum Ansteuern eines Gerätes wie eines Elektromotors unterscheidet. So fehlt es beim Einspeisen eines Stroms in ein elektrisches Netz üblicherweise an einer unmittelbaren und insbesondere deterministischen Reaktion auf die Einspeisung, wie es im Falle eines gut bekannten Verbrauchers der Fall wäre. Zwar reagiert auch das elektrische Netz auf den jeweils eingespeisten Strom, gleichwohl ist eine solche Reaktion mit der eines unmittelbar vorhandenen und klar identifizierbaren Verbrauchers wie beispielsweise eines elektrischen Motors, nicht vergleichbar.

Die Berechnung des ersten, zweiten und dritten Sollstroms erfolgt in Abhängigkeit wenigstens eines Wertes des Spannungs-Mitsystems und/oder des Spannungs-Gegensystems. Somit wird zunächst einmal vorgeschlagen, beim Einspeisen in das dreiphasige Netz Unsymmetrien des Netzes zu berücksichtigen und dementsprechend die drei einzuspeisenden Ströme zu berechnen. Für die Berücksichtigung der Netzunsymmetrien wird somit die Berechnung der Sollströme in Abhängigkeit des Spannungs-Mitsystems bzw. des Spannungs-Gegensystems vorgeschlagen. Hierdurch kann gezielt auf entsprechende Unsymmetrien im Netz reagiert werden.

Im Gegensatz zu herkömmlichen Großkraftwerken, die über einen Star mit dem Netz gekoppelten Synchrongenerator die Netzeinspeisung vornehmen, wird nun eine gezielte Berechnung der Sollströme in Abhängigkeit der Unsymmetrie bzw. unter Berücksichtigung derselben vorgeschlagen.

Es erfolgt also eine Berücksichtigung etwaiger Unsymmetrien der Netzspannung, was Konsequenzen auf die Berechnung des einzuspeisenden Stromes hat. Das Mitsystem und/oder Gegensystem der Netzspannung wirkt sich somit aus auf die einzuspeisenden Ströme aus.

Gemäß der Erfindung wird vorgeschlagen, dass mittels eines Frequenzwechselrichters elektrische Ströme entsprechend dem ersten, zweiten und dritten Sollstrom zum Einspeisen in das dreiphasige Spannungsnetz erzeugt und eingespeist werden. Es erfolgt somit im Grunde unmittelbar eine Erzeugung der Ströme durch den Wechselrichter, wie dies beispielsweise durch eine Pulsweitenmodulation vorgenommen werden kann. Hierfür kann die einzuspeisende Energie in einem Gleichspannungszwischenkreis bereitgestellt werden, von dem aus die Pulsweitenmodulation durchgeführt wird, um aus dem Gleichspannungssignal des Gleichspannungszwischenkreises einen oszillierenden, insbesondere sinusförmigen Strom jeweils zu generieren.

Es wird die elektrische Energie hierfür, insbesondere für den beispielhaft genannten Gleichspannungszwischenkreis, durch eine Windenergieanlage bereitgestellt, die erzeugte Wechselspannungsenergie mittels eines Gleichrichters in Energie mit einer Gleichspannung wandelt. Hierdurch soll insbesondere ermöglicht werden, Windenergieanlagen oder Windparks mit mehreren Windenergieanlagen zum Stabilisieren des Netzes und insbesondere zum Stabilisieren eines unsymmetrischen Netzes einzusetzen. Zumindest wird vorzugsweise die elektrische Energie von Windenergieanlagen so ins Netz eingespeist, dass eine etwaige vorliegende Unsymmetrie nicht verstärkt wird, der Netzzustand also nicht verschlechtert wird.

Gemäß einer Ausführungsform ist das Verfahren dadurch gekennzeichnet, dass zum Berechnen der Sollströme ein Berechnungsphasenwinkel zugrunde gelegt wird und der Berechnungsphasenwinkel abhängig von einer Detektion eines Netzfehlers bestimmt wird, insbesondere unter Verwendung eines Bestimmungsfilters bzw. Filterblocks. Dabei wird der Berechnungsphasenwinkel aus einem erfassten Phasenwinkel einer der Netzspannungen bestimmt, wenn kein Netzfehler detektiert wurde. Andernfalls, wenn ein Netzfehler detektiert wurde oder anzunehmen ist, wird vorgeschlagen, dass der Berechnungsphasenwinkel anderweitig, insbesondere aus einem Phasenwinkel des Spannungs-Mitsystems bestimmt wird und/oder dass der Berechnungsphasenwinkel unter Verwendung einer vorgegebenen Netzfrequenz bestimmt wird.

Demnach legt die Bestimmung bzw. Berechnung der Sollströme nicht unmittelbar einen bei der Messung der dreiphasigen Spannung erfassten Phasenwinkel zugrunde, sondern es wird ein spezieller Phasenwinkel berechnet, der der Berechnung der Sollströme zugrunde gelegt wird und der deswegen als Berechnungsphasenwinkel bezeichnet wird. Der Berechnungsphasenwinkel sollte sich beispielsweise durch eine hohe Genauigkeit und/oder geringes Rauschen auszeichnen. Der Berechnungsphasenwinkel kann beispielsweise über einen Bestimmungsfilter bzw. Filterblock bestimmt werden. Dieser Bestimmungsfilter bzw. Filterblock kann beispielsweise als Zustandsbeobachter ausgebildet sein. Eine Berechnung des Phasenwinkels kann beispielsweise so erfolgen, wie in der Offenlegungsschrift DE 10 2009 031 017 A1 im Zusammenhang mit der dortigen Fig. 4 beschrieben ist. Insbesondere kann die Bestimmung so erfolgen wie dort die Bestimmung des Phasenwinkels $\varphi_1$ aus dem erfassten Phasenwinkel $\varphi_N$ beschrieben ist.

Der Berechnungsphasenwinkel wird vorzugsweise aus einem Phasenwinkel des Spannungs-Mitsystems bestimmt, wenn ein Netzfehler detektiert wurde. Hier wird insbesondere auf diese andere Quelle zur Bestimmung umgeschaltet, was auch als Softwarelösung ausgeführt sein kann. Hierfür wird die Verwendung des Phasenwinkels des Spannungs-Mitsystems vorgeschlagen. Zumindest zu Beginn eines auftretenden Netzfehlers kann es möglich sein, dass der Phasenwinkel des Spannungs-Mitsystems einen verlässlichen Wert oder zumindest ausreichend verlässlichen Wert für den Phasenwinkel liefert. Häufig geht ein Netzfehler auch mit Problemen der Spannungsmessung einher. Dies kann beispielsweise darin begründet sein, dass die Spannung nicht, schlecht oder teilweise nicht oder schlecht gemessen werden kann. Ein anderes Problem kann darin bestehen, dass eine Messung bzw. Erfassung der Spannung des dreiphasigen Systems von Bedingungen ausgeht, die möglicherweise im Netzfehlerfall nicht mehr vorliegen.

Alternativ oder zusätzlich wird vorgeschlagen, im Falle eines Netzfehlers zur Berechnung des Berechnungsphasenwinkeis eine vorgegebene Netzfrequenz zu verwenden. Im einfachsten Fall wird eine feste Frequenz wie beispielsweise die Nennfrequenz, also z.B. exakt 50 Hz oder exakt 60 Hz, konstant vorgegeben und der Phasenwinkel daraus, im einfachsten Fall über Integration bestimmt. Vorzugsweise wird die Verwendung einer vorgegebenen Frequenz mit der Verwendung eines Phasenwinkels aus dem Spannungs-Mitsystem kombiniert. Eine solche Kombination kann so erfolgen, dass die Bestimmung des Spannungs-Mitsystems und dabei auch des Spannungs-Gegensystems selbst eine vorgegebene Frequenz verwendet, wobei entsprechend auch der Phasenwinkel des Spannungs-Mitsystems bestimmt wird und somit unter Verwendung der vorgegebenen Frequenz bestimmt wird.

Weiter bevorzugt wird vorgeschlagen, dass für die Berechnung der Sollströme, insbesondere wenn ein Netzfehler detektiert wird, auf das Spannungs-Mitsystem, insbesondere auf den Phasenwinkel des Spannungs-Mitsystems referenziert wird. Ein wichtiger Aspekt beim Einspeisen elektrischen Stroms in ein Wechselspannungsnetz, insbesondere in ein dreiphasiges Wechselspannungsnetz, ist der Phasenwinkel, mit dem in das Netz eingespeist wird. Die Vorgabe eines Phasenwinkels des dreiphasigen Sollstroms bzw. eines Phasenwinkels für jeden Sollstrom setzt eine möglichst genaue Kenntnis des Netzphasenwinkels voraus bzw. eine möglichst genaue Kenntnis ist wünschenswert. Problematisch bei der Einspeisung des dreiphasigen Stroms ist daher eine ungenaue Kenntnis des Netzphasenwinkels, die beispielsweise dann auftreten kann, wenn ein Netzfehler vorliegt. Ebenso ist - gegebenenfalls mit dem zusätzlichen Problem einer ungenauen Messung - ein unsymmetrisches Netz problematisch, weil sich bereits Probleme bei der Festlegung eines geeigneten Phasenwinkels für einen solchen unsymmetrischen Fall ergeben können.

Durch die Referenzierung auf den Phasenwinkel der Spannungs-Mitsystemkomponente wird hier eine Lösung vorgeschlagen, die diese Probleme adressiert. Aus der Bestimmung der Mitsystemkomponente, die das Bestimmen des Phasenwinkels der Mitsystemkomponente beinhaltet, ergibt sich ein verhältnismäßig stabiler Wert, der gleichzeitig etwaige Unsymmetrien des dreiphasigen Netzes berücksichtigt. Die Referenzierung der Bestimmung der Sollströme hierauf, also das Zugrundelegen des Phasenwinkels des Mitsystems bzw. eines hieraus berechneten Phasenwinkels der Spannung, ermöglicht somit eine geeignete Sollstromvorgabe auch für nicht ideale Bedingungen im dreiphasigen Netz.

Insbesondere wenn ideale Bedingungen im dreiphasigen Netz vorliegen, kann auf die Verwendung des erfassten Phasenwinkels einer der Netzspannungen umgeschaltet werden und umgekehrt. Eine solche Umschaltung erfolgt vorzugsweise eingangsseitig zu einem Filter, insbesondere eingangsseitig des Bestimmungsfilters bzw. Filterblocks. Durch die Verwendung eines Bestimmungsfilters bzw. Filterblocks kann ein entsprechender Umschaltsprung ebenfalls gefiltert werden. Wird beispielsweise ein Berechnungsphasenwinkel aus dem erfassten Phasenwinkel einer Netzspannung oder einem Phasenwinkel des Spannungs-Mitsystems so bestimmt wie dies in der Fig. 4 der deutschen Offenlegungsschrift DE 10 2009 031 017 A1 beschrieben ist, weist der Bestimmungsfilter bzw. Filterblock ein Übertragungsverhalten zweiter Ordnung auf. Ein Umschaltpuls oder Umschaltsprung am Eingang eines solchen Bestimmungsfilters hat entsprechend geringe Auswirkungen am Ausgang des Bestimmungsfilters bzw. Filterblocks und damit ergeben sich nur wenige oder vernachlässigbare Probleme bei der weiteren Verwendung zur Referenzierung bei der Berechnung der Sollströme.

Bei dem erfindungsgemäßen Verfahren wird ferner vorgeschlagen, dass das Transformieren der ersten, zweiten und dritten Spannung in ein Spannungs-Mitsystem und ein Spannungs-Gegensystem eine Transformation der ersten, zweiten und dritten Spannung mittels einer diskreten Fourier-Transformation (DFT) umfasst, wobei die diskrete Fourier-Transformation nur über eine halbe Periodendauer durchgeführt wird, und insbesondere auch online. Die diskrete Fourier-Transformation bestimmt aus den gemessenen Spannungswerten der drei Phasen komplexe Spannungswerte für die drei Phasen, also für jede der drei Phasenspannungen eine Spannung nach Amplitude und Phase. Um auch nicht ideale Bedingungen des dreiphasigen Netzes berücksichtigen zu können, kann mitunter ein sehr schnelles Erfassen der Netzsituation, insbesondere ein schnelles Erfassen von Änderungen der Spannungen im Netz für eine angepasste Stromeinspeisung wichtig oder sogar von entscheidender Bedeutung sein. Bei Verwendung der Mitsystemkomponente und Gegensystemkomponente, insbesondere bei einer Referenzierung auf den Phasenwinkel der Mitsystemkomponente der Spannung sollte sich auch in diesen Komponenten so schnell wie möglich eine maßgebliche Änderung des Netzzustandes widerspiegeln. Entsprechend sollte auch die diskrete Fourier-Transformation möglichst schnell arbeiten.

Üblicherweise geht eine Fourier-Transformation und somit auch eine diskrete Fourier-Transformation von wenigstens einer ganzen Periodendauer aus. Diese wird zugrunde gelegt und ist auch essentiell für eine korrekte Durchführung einer Fourier-Transformation. Es wurde nun aber erkannt, dass die Zugrundelegung einer halben Periodendauer ausreichend sein kann. Entsprechend wurde die Fourier-Transformation, nämlich die diskrete Fourier-Transformation, darauf angepasst.

Vorzugsweise erfolgt die Transformation online, nämlich in dem Sinne, dass zu jedem Messpunkt die Werte der drei Spannungen aufgenommen werden und in die diskrete Fourier-Transformation einfließen, die ebenfalls zu jedem Messzeitpunkt durchgeführt wird. Somit wirken sich aufgenommene Messwerte sofort auch auf das Ergebnis der diskreten Fourier-Transformation aus. Die jeweils aktuell gemessenen Messwerte fließen als neue Werte ein und die restlichen, bereits zuvor gemessenen Werte der aktuellen Halbwelle fließen ebenfalls ein. Eine Änderung der Situation im Netz wird somit mit dem ersten Messwert erste Auswirkungen haben, nach Messung einer halben Periodendauer werden sie sich vollständig auf das Ergebnis der diskreten Fourier-Transformation ausgewirkt haben.

Unter einer diskreten Fourier-Transformation für eine halbe Periodendauer ist somit zu verstehen, dass im Sinne eines gleitenden Wertes jeweils die aktuellen Messwerte bis hin zu den um eine halbe Periodendauer zurückliegenden Messwerten aufgenommen werden und in die diskrete Fourier-Transformation einfließen.

Somit kann die Dauer, nach der sich neue Messwerte vollständig auf das Ergebnis der diskreten Fourier-Transformation auswirken, gegenüber einer herkömmlichen diskreten Fourier-Transformation über eine ganze Periodenlänge halbiert. Entsprechend wird die diskrete Fourier-Transformation doppelt so schnell zu einem Ergebnis führen bzw. es können sich etwaige Erkennungszeiten halbieren.

Gemäß einer Ausführungsform wird ein Verfahren vorgeschlagen, das dadurch gekennzeichnet ist, dass das Transformieren der ersten, zweiten und dritten Spannung in ein Spannungs-Mitsystem und ein Spannungs-Gegensystem anstelle einer Messung der aktuellen Netzfrequenz eine vorbestimmte Frequenz verwendet. Eine solche vorbestimmte Frequenz kann beispielsweise die Nennfrequenz des Netzes sein, also insbesondere 50 Hz im Falle des europäischen Verbundnetzes oder beispielsweise 60 Hz in den USA. Die vorbestimmte Frequenz kann aber auch anderweitig festgelegt werden, entweder als anderer fester Wert oder auch durch eine Berechnungsvorschrift oder die verwendete Netzfrequenz wird einem Modell entnommen.

Dieser Ausführungsform liegt der Gedanke zugrunde, dass durch die Vorgabe einer Netzfrequenz die Transformation beeinflusst, insbesondere verbessert werden kann, insbesondere im Sinne einer Stabilisierung der Transformation. Ein solches Vorgehen ist gerade dann einsetzbar, wenn ein Netzfehler vorliegt und die tatsächliche Netzfrequenz schwierig, ungenau oder gar nicht messbar ist.

Vorzugsweise kann als vorbestimmte Netzfrequenz der Wert der Netzfrequenz eines zurückliegenden Messzeitpunktes verwendet werden. In diesem Fall orientiert sich die Transformation an dem letzten, insbesondere verlässlich messbaren Wert der tatsächlichen Netzfrequenz.

Eine bevorzugte Ausgestaltung schlägt vor, dass das Verfahren dadurch gekennzeichnet ist, dass die Sollströme nach der Methode der symmetrischen Komponenten über ein Strom-Mitsystem und ein Strom-Gegensystem vorgegeben werden. Insbesondere wird hierbei das Mitsystem durch eine komplexe Mitsystemstromkomponente nach Betrag und Phase und das Gegensystem durch eine komplexe Gegensystemstromkomponente nach Betrag und Phase berücksichtigt.

Die Methode der symmetrischen Komponenten ist als Methode zum Erfassen eines vorhandenen unsymmetrischen dreiphasigen Systems bekannt, also im Grunde als Messverfahren. Hier wird nun vorgeschlagen, die Ströme basierend auf einer Zerlegung gemäß der Methode der symmetrischen Komponenten vorzugeben. Diese Vorgabe kann insbesondere so erfolgen, dass zwei komplexe Ströme, nämlich die Mitsystemstromkomponente und die Gegensystemstromkomponente vorgegeben wird. Darauf basierend werden dann die einzelnen drei Sollströme jeweils nach Betrag und Phase vorgegeben.

Gemäß einer Ausführungsform wird somit die Berechnung des ersten, zweiten und dritten Stromsollwertes in Abhängigkeit eines Wertes eines Spannungs-Mitsystems und/oder Spannungs-Gegensystems der dreiphasigen, vorliegenden Netzspannung durchgeführt, wobei die konkrete Vorgabe des dreiphasigen, zu erzeugenden Stroms über die Vorgabe von Mitsystemstromkomponenten und Gegensystemstromkomponenten folgt. Es liegen in diesem Fall zwei völlig unterschiedliche Vorgehensweisen bzw. Schritte zugrunde.

Im ersten Schritt wird von dem Istzustand eines dreiphasigen Systems, und zwar des dreiphasigen Spannungssystems ausgegangen und dieser Istzustand unter Zuhilfenahme der Methode der symmetrischen Komponenten abgebildet.

Im zweiten Schritte sind die Sollströme betroffen, wobei gänzlich anders vorgegangen wird, indem nämlich eine Vorgabe im Bildbereich erfolgt. Insbesondere kann über die Mitsystemskomponente und Gegensystemkomponente ein gewünschter Unsymmetriegrad vorgegeben werden. Ebenso kann in diesem Bildbereich, also der Darstellungsbereich durch Verwendung von Mit- und Gegensystemkomponente, der Phasenwinkel vorgegeben werden. Davon ausgehend werden dann die tatsächlichen Sollströme, also die Sollströme im Zeitbereich, bestimmt und schließlich entsprechend umgesetzt.

Vorzugsweise werden die Sollströme über ein Mit- und Gegensystem vorgegeben. Bei der Umsetzung dieser Sollströme als einzelne Sollströme im Zeitbereich referenzieren diese vorzugsweise auf einen Phasenwinkel des Spannungs-Mitsystems, also des Mitsystems, das dem Istzustand der Spannungen im dreiphasigen Netz zuzuordnen ist.

Vorzugsweise werden die Sollströme abhängig von dem Strom-Mitsystem bzw. der Mitsystemstromkomponente berechnet und bei Annahme eines Netzfehlers werden sie zusätzlich abhängig von dem Strom-Gegensystem bzw. der Gegensystemstromkomponente berechnet. Somit kann insbesondere ein dreiphasiger Sollstrom über Mitsystem- und Gegensystemstromkomponente vorgegeben werden, wohingegen abhängig von der Netzsituation beide Komponenten verwendet werden, nämlich im Falle eines Netzfehlers, oder nur die Mitsystemkomponente verwendet wird, wenn nicht von einem Netzfehler auszugehen ist. Hierdurch kann eine Berücksichtigung von Netzproblemen, wie Netzfehlern und/oder Netzunsymmetrien erfolgen.

Dabei wird insbesondere bei Vorliegen eines symmetrischen fehlerfreien Netzes eine effiziente Methode zum Einspeisen vorgeschlagen, die hinsichtlich der Sollströme nur die Mitsystemstromkomponente berücksichtigt, die im Grunde das symmetrische Netz widerspiegelt. Ist das Netz im mathematischen Sinne vollständig symmetrisch, ergibt sich die Gegenstromkomponente zu null und entsprechend wird die Gegenstromkomponente klein sein, wenn von geringen Unsymmetrien ausgegangen werden kann. Es wird somit vorgeschlagen, in geeigneten Fällen auf die Berücksichtigung der Gegenstromkomponente zu verzichten. Der Vollständigkeit halber wird darauf hingewiesen, dass der Begriff Gegenstromkomponente die Gegensystemstromkomponente und der Begriff Mitstromkomponente die Mitsystemstromkomponente bezeichnet. Das Netz kann als Spannungsnetz bezeichnet werden, um hervorzuheben, dass das Netz spannungsbasierend arbeitet.

Gemäß einer bevorzugten Ausführungsform ist das Verfahren dadurch gekennzeichnet, dass das Strom-Mitsystem bzw. die Mitsystemstromkomponente und das Strom-Gegensystem bzw. die Gegensystemstromkomponente abhängig von einer Vorgabe eines Wirkleistungsanteils des Mitsystems, einer Vorgabe eines Blindleistungsanteils des Mitsystems und/oder einer Vorgabe eines Quotienten des Betrags der Gegensystemstromkomponente im Verhältnis zum Betrag der Mitsystemstromkomponente bestimmt wird.

Hierdurch kann auf einfache Art und Weise ein Wirkleistungsanteil und ein Blindleistungsanteil vorgegeben werden. Vorzugsweise wird die Gegenstromkomponente eingesetzt, um einer Unsymmetrie des elektrischen dreiphasigen Netzes entgegenzuwirken. Unabhängig davon kann ein Wirk- und Blindleistungsanteil des einzuspeisenden Stroms über die Mitsystemstromkomponente vorgegeben werden. Dies ist insbesondere dann vorteilhaft und sinnvoll, wenn die Einspeisung der Sollströme auf den Phasenwinkel des Spannungs-Mitsystems referenziert. So kann es gelingen, im Wesentlichen einen symmetrischen Stromanteil angepasst an den symmetrischen Spannungsanteil einzuspeisen und gleichzeitig Unsymmetrien sowohl bei der Erfassung als auch bei der Einspeisung zu berücksichtigen.

Die Vorgabe eines Unsymmetriegrades oder einer zu einem Unsymmetriegrad charakteristischen Größe kann auf einfache Weise bei der Vorgabe des dreiphasigen Sollstroms über Mit- und Gegensystemkomponente erfolgen, wenn deren Quotient, nämlich der Quotient von Gegensystemkomponente zu Mitsystemkomponente festgelegt wird. Alternativ kann auch statt eines festen Wertes eine Obergrenze für einen Unsymmetriegrad vorgegeben werden.

Vorzugsweise wird die Gegensystemstromkomponente unabhängig von der Mitsystemstromkomponente eingestellt und/oder variiert. So kann beispielsweise über die Mitsystemstromkomponente zunächst einmal die im Wesentlichen einzuspeisende Leistung, insbesondere Wirkleistung der Amplitude nach vorgegeben werden. Entsprechend wird hierdurch - vereinfacht ausgedrückt - der Gesamtstrom in erster Näherung in seiner Amplitude vorgegeben. Bei der Vorgabe der komplexen Mitsystemstromkomponente erfolgt auch über den Phasenwinkel eine Aufteilung von Wirk- und Blindleistung bzw. Wirk- und Blindleistungsanteil, wie oben beschrieben wurde.

Über die Gegenstromkomponente kann zunächst einmal dem Grunde nach eine Unsymmetrie vorgegeben werden. Insbesondere kann eine Unsymmetriekomponente gezielt, insbesondere nach Qualität und Quantität, zum zumindest teilweisen Kompensieren einer Unsymmetrie in elektrischen Spannungsnetzen vorgegeben werden. Entsprechend verschafft die Verwendung von Mitsystemstromkomponente und Gegensystemstromkomponente einen hohen Freiheitsgrad bei der Vorgabe des einzuspeisenden dreiphasigen Stroms. Die Größe der Mitsystemstromkomponente wird insbesondere auch wesentlich von der zur Verfügung stehenden Leistung der Windenergieanlage und dabei abhängig der vorherrschenden Windbedingungen eingestellt werden.

Vorzugsweise wird das Verfahren online durchgeführt. Insbesondere werden vorzugsweise alle Verfahrensschritte online durchgeführt. Hierdurch kann so schnell wie möglich auf etwaige Netzveränderungen reagiert und die Einspeisung des elektrischen Stroms entsprechend angepasst werden. Insbesondere sind die beschriebenen Ausführungsformen für eine solche Online-Durchführung vorbereitet, wie das insbesondere für die Transformation des erfassten dreiphasigen Spannungssystems in Mit- und Gegenspannungssystemkomponente der Fall ist. Insbesondere die beschriebene auf die Verwendung nur einer halben Periodendauer angepasste diskrete Fourier-Transformation ermöglicht ein solches Online-Durchführen des Verfahrens zum Erfassen und Einspeisen des elektrischen Stroms.

Erfindungsgemäß wird zudem eine Windenergieanlage vorgeschlagen, die ein Verfahren zum Einspeisen elektrischen Stroms in ein elektrisches dreiphasiges Spannungsnetz wenigstens einer der beschriebenen Ausführungsformen einsetzt.

Erfindungsgemäß wird zudem ein Windpark mit mehreren solcher Windenergieanlagen vorgeschlagen. Ein solcher Windpark kann mit heutigen modernen Windenergieanlagen Größenordnungen annehmen, die eine signifikante Beeinflussung des elektrischen Netzes, insbesondere Stützung des elektrischen Netzes und auch Qualitätsverbesserung des Stromes im elektrischen Netz ermöglicht.

Dabei ist unter einem Windpark eine Ansammlung mehrerer Windenergieanlagen zu verstehen, die miteinander interagieren, insbesondere einen oder mehrere gemeinsame Einspeisepunkte zum Einspeisen elektrischen Stroms in ein elektrisches Netzwerk verwenden.

Nachfolgen wird die Erfindung anhand von Ausführungsbeispielen unter Bezugnahme auf die begleitenden Figuren exemplarisch erläutert.

Fig. 1    zeigt eine Windenergieanlage.

Fig. 2    zeigt ein Übersichtsdiagramm zur Erläuterung einer Ausführungsform des erfindungsgemäßen Verfahrens.

Fig. 3    zeigt einen Berechnungsblock der Fig. 2 im Detail.

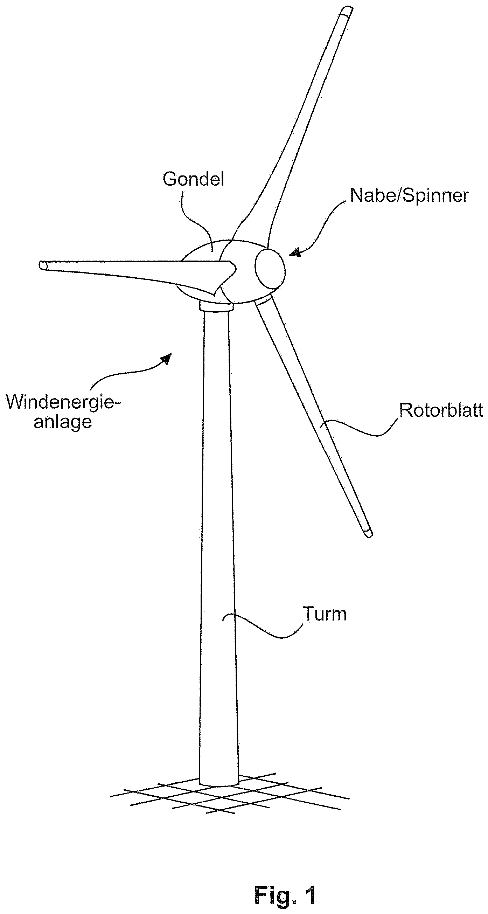

Fig. 1 zeigt eine Windenergieanlage, die unter anderem ein erfindungsgemäßes Verfahren realisiert und dazu zumindest einen Frequenzumrichter mit entsprechender Ansteuerung aufweist, um damit in ein elektrisches dreiphasiges Netz einzuspeisen.

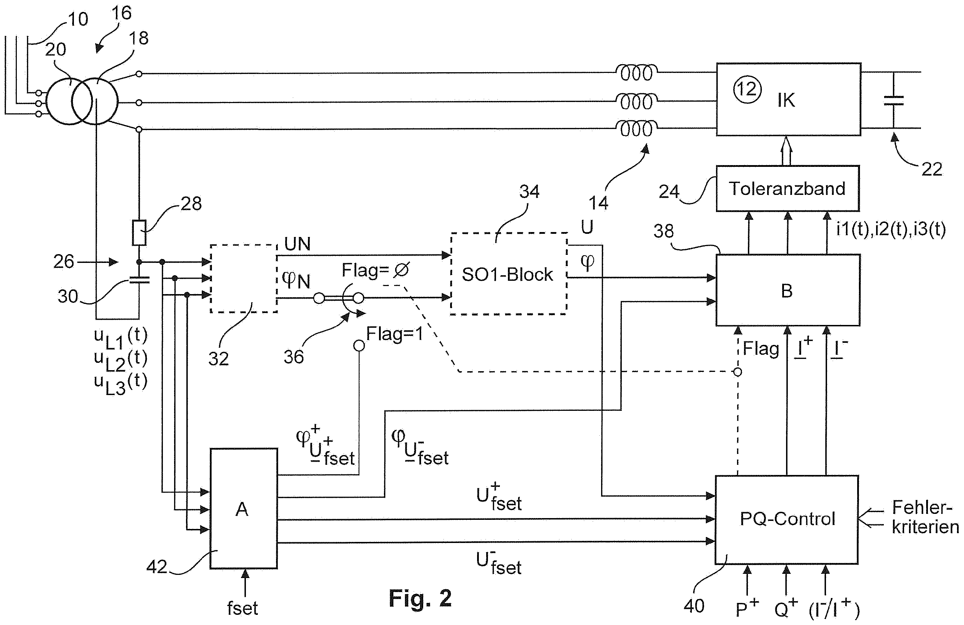

Die Struktur einer Ausführungsform der Erfindung gemäß Fig. 2 geht aus von einem Dreiphasennetz 10, in das ein Wechselrichter 12 über Ausgangsdrosseln 14 und über einen Transformator 16 einspeist. Der Transformator 16 weist eine Primärseite 18 und eine Sekundärseite 20 auf. Über die Sekundärseite 20 ist der Transformator 16 mit dem Dreiphasennetz 10 verbunden, und die Primärseite 18 ist über die Ausgangsdrosseln 14 mit dem Wechselrichter 12 verbunden.

Der Wechselrichter 12 wird über einen Gleichspannungszwischenkreis 22 mit einem Gleichstrom bzw. einer Gleichspannung versorgt, vorzugsweise kann der Gleichspannungszwischenkreis 22 von einer Windenergieanlage bzw. einem Generator einer Windenergieanlage gespeist werden, in dem durch den Generator erzeugter elektrischer Strom mittels eines Gleichrichters gleichgerichtet und in diesen Gleichspannungszwischenkreis 22 eingespeist wird.

Der Wechseltrichter 12 erzeugt somit aus dem Gleichstrom bzw. der Gleichspannung des Gleichspannungszwischenkreises 22 einen dreiphasigen Wechselstrom, der drei Einzelströme $i_1$, $i_2$ und $i_3$ aufweist. Der dreiphasige Wechselstrom bzw. die drei einzelnen Ströme werden mittels einer Pulsweitenmodulation erzeugt. Die hierfür nötigen Pulse werden mittels einer Toleranzbandsteuerung gemäß dem entsprechenden Toleranzbandblock 24 vorgegeben. Der Toleranzbandblock 24 erhält hierfür die zu steuernden Ströme $i_1$, $i_2$ und $i_3$ als Sollwerte.

Die Berechnung der Schaltzeiten basierend auf den Stromsollwerten durch den Toleranzbandblock 24 erfolgt in im Grunde bekannter Art und Weise gemäß einem Toleranzbandverfahren. Demnach wird - vereinfacht ausgedrückt - eine Schalthandlung eines entsprechenden Halbleiterschalters zum Erzeugen oder Beenden eines Pulses ausgelöst, wenn ein Stromistwert aus einem Toleranzband ausbricht, also den jeweiligen Sollwert um mehr als einen Toleranzwert überschreitet oder um mehr als diesen oder einen anderen Toleranzwert unterschreitet. Grundsätzlich können auch andere Verfahren anstelle dieses Toleranzbandverfahrens eingesetzt werden.

Ein wesentlicher Aspekt der vorliegenden Erfindung ist die Bestimmung dieser Sollwerte $i_1$, $i_2$ und $i_3$ und/oder der Verlauf der drei Sollströme. Dabei ist der Verlauf der Sollströme auch im Zusammenhang mit dem Netzverhalten zu verstehen bzw. zu bewerten.

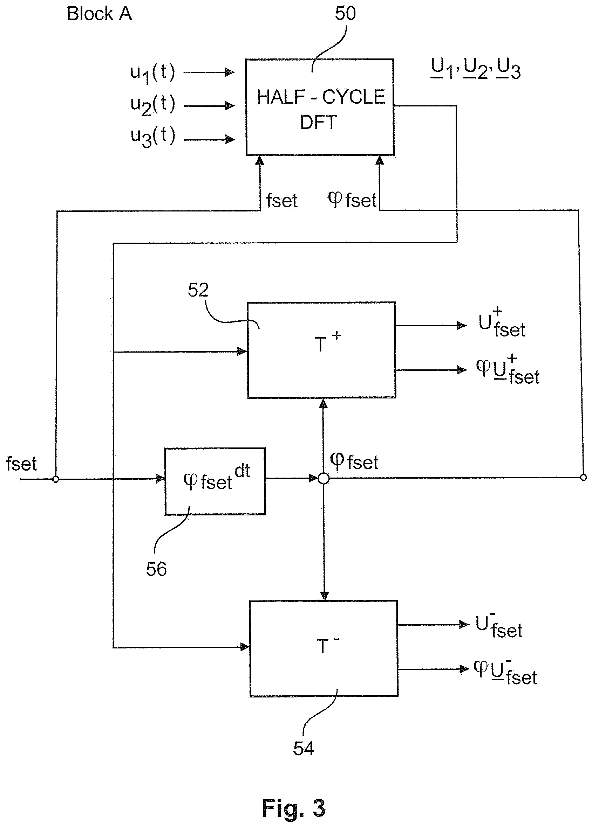

Um bedarfsgerecht ins Netz einzuspeisen - anstelle des Begriffes Netz kann auch synonym der Begriff Netzwerk verwendet werden - ist das Messfilter 26 vorgesehen, das die Spannungen der drei Phasen des Netzes misst und dafür jeweils einen Messwiderstand 28 und eine Messkapazität 30, also einen Kondensator aufweist. Diese Elemente sind für jede Phase vorgesehen, und gemäß der Fig. 2 erfolgt die Messung der Spannungen an der Primärseite 18 des Transformators 16. Alternativ kann auf der Sekundärseite 20 des Transformators 16 oder auch an anderen Stellen im Netz 10 gemessen werden. Zur Durchführung von Messungen eines dreiphasigen Netzes wird auch auf die deutsche Patentanmeldung DE 10 2009 031 017 A1 verwiesen, die dort in der Fig. 3 einen Messfilter offenbart, der dem Messfilter 26 dieser Fig. 2 entspricht.

Die gemessenen Spannungen $u_{L1}$ (p), $u_{L2}$ (t) und $u_{L3}$ (t) werden in den Transformationsblock 32 eingegeben, der eine Transformation zu einem Zeitpunkt der in Polarkoordinaten gemessenen Spannungswerte in eine komplexwertige Größe mit Betrag und Phase berechnet, nämlich der Netzspannung $U_N$ als Betrag und dem Winkel $\phi_N$ als Phase. Der Phasenwinkel bezieht sich auf die erste Spannung. Die Berechnung kann wie folgt durchgeführt werden, wobei $u_1$, $u_2$ und $u_3$ jeweils den momentanen Spannungswert der Spannungen $u_{L1}$ (t), $u_{L2}$ (t) und $u_{L3}$ (t) darstellen:

$$\vec{u} = \left[ u_1 + u_2 \exp\left( j\frac{2}{3}\pi \right) + u_3 \exp\left( j\frac{4}{3}\pi \right) \right]$$

$$U_N = \sqrt{\frac{2}{3}} \sqrt{(real(\vec{u}))^2 + (imag(\vec{u}))^2}$$

$$\varphi_M = \arctan(imag(\vec{u}) / real(\vec{u}))$$

Diese Gleichungen und weitere Erläuterungen dazu sind im Übrigen in der bereits genannten deutschen Offenlegungsschrift DE 10 2009 031 017 A1 zu entnehmen.

Die so bestimmte Netzspannung $U_N$ und der so bestimmte Netzphasenwinkel $\phi_N$ werden in den Zustandsbeobachterblock 34, der auch als SO1-Block bezeichnet werden kann, eingegeben. Der Eingang des Zustandsbeobachterblocks 34 für den Phasenwinkel weist noch einen Zustandsschalter 36 auf, der abhängig von einem etwaigen Fehlerfall im Netz so umgestaltet werden kann, dass statt des Netzphasenwinkels $\phi_N$ als Ausgang des Transformationsblocks 32 ein anderer Phasenwinkel in den Zustandsbeobachterblock 34 eingegeben werden kann, was nachfolgen noch erläutert werden wird.

Der Zustandsbeobachterblock 34 gibt als beobachtete Zustandsgröße die Schätzgröße U als geschätzter Effektivwert der Netzspannung und den geschätzten Phasenwinkel $\phi$ als Schätzgröße des Netzphasenwinkels aus.

Eine mögliche Ausführung des Transformationsblocks 32 zusammen mit dem Zustandsbeobachterblock 34 kann auch in der bereits genannten deutschen Offenlegungsschrift DE 10 2009 031 017 A1 entnommen werden. Hierzu wird verwiesen auf die Fig. 4 nebst dazugehöriger Beschreibung. Der Transformationsblock 32 kann beispielsweise so ausgeführt sein, wie der Block Nr. 6 der Fig. 4 besagter Offenlegungsschrift. Der Zustandsbeobachterblock 34 kann beispielsweise so ausgeführt werden, wie der Block F1 mit den Blöcken 10 und 12.

Der geschätzte Phasenwinkel $\phi$ wird direkt in einen Entscheidungsblock 38 eingegeben. Der Entscheidungsblock 38 berechnet Sollwerte für die Dreiphasenströme $i_1$ (t), $i_2$ (t) und $i_3$ (t). Diese Sollströme bilden den Eingang für den Toleranzbandblock 24 und damit die Basis für die Modulation die in dem Wechselrichter 12 durchgeführt wird. Der geschätzte Phasenwinkel $\phi$ ist hierfür eine wichtige Grundgröße, weil eine Einspeisung von Wechselströmen in einem laufenden Wechselstromnetz nur in Kenntnis des jeweils momentanen Phasenwinkels im Netz möglich ist. Gleichwohl berücksichtigt der Entscheidungsblock 38 zumindest indirekt weitere Informationen, nämlich die geschätzte Netzspannung U, etwaige Vorgabewerte einzuspeisender Wirk- und/oder Blindleistung sowie die Information, ob ein - relevanter - Netzfehler vorliegt oder vorliegen könnte. Diese Informationen gelangen letztlich über einen PQ-Steuerungsblock 40 in den Entscheidungsblock 38. Der Entscheidungsblock 38 führt eine Berechnung oder Bestimmung der Sollströme $i_1$ (t), $i_2$ (t) und $i_3$ (t) aus, wobei die zugrunde gelegte Berechnung davon abhängt, ob ein Netzfehler erkannt wurde oder nicht. Aus diesem Grunde wurde auch der Begriff Entscheidungsblock für diesen Block 38 gewählt. Die internen Berechnungen des Entscheidungsblocks 38 werden nachfolgend noch ausgeführt. Weitere Informationen zu dem PQ-Steuerungsblock werden ebenfalls nachfolgend noch gegeben.

Der Entscheidungsblock 38 verwendet - was nachfolgend noch im Detail ausgeführt wird - eine Zerlegung in ein Mitsystem und ein Gegensystem. Entsprechend bildet der Mitsystemstrom bzw. die Mitsystemstromkomponente $I^+$ und der Gegensystemstrom bzw. die Gegensystemstromkomponente $\underline{I}^-$ jeweils eine Eingangsgröße des Entscheidungsblocks 38. Der Entscheidungsblock 38 basiert - jedenfalls wenn kein Netzfehler vorliegt - auf dem Mitsystem, das generell in dieser Anmeldung durch ein hochgestelltes Pluszeichen gekennzeichnet ist, wohingegen die Gegensystemkomponente durch ein hochgestelltes Minuszeichen gekennzeichnet ist. mit anderen Worten referenziert das System der Fig. 2, insbesondere die Berechnung in dem Entscheidungsblock 38 auf die Mitsystemkomponente.

Eine Zerlegung der gemessenen Spannungen $U_1$ (t), $U_2$ (t) und $U_3$ (t) in ein Mitsystem oder Gegensystem wird in dem Berechnungsblock 42 durchgeführt, der hierfür eine vorgegebene Frequenz $f_{set}$ verwendet. Diese Frequenz kann im einfachsten Fall der angenommenen Netzfrequenz, also beispielsweise 50Hz im europäischen Verbundnetz oder 60Hz im US-amerikanischen Netz betragen. Es können aber auch andere Werte, gegebenenfalls auch veränderliche Werte gewählt werden.

Der Entscheidungsblock 38 erhält als Eingangssignale außerdem zumindest noch den Phasenwinkel $\varphi_{U_{fset}}$ des Gegensystems gemäß der Transformation der dreiphasigen Spannung in dem Berechnungsblock 42. Weiterhin erhält der Entscheidungsblock 38 als Eingang ein Flag als Indikator, ob von einem Netzfehler ausgegangen wird oder nicht. Die in dem Entscheidungsblock 38 durchgeführten Berechnungen der drei Sollströme $i_1$ (t), $i_2$ (t) und $i_3$ (t) werden abhängig von dem Wert für das Flag durchgeführt.

Ist das Flag 0, liegt also kein Fehlerfall vor, werden die drei Ströme wie folgt berechnet:

$$i_1 (t) = \sqrt{2} I^+ \cos(\varphi + \varphi_{\underline{I}^+})$$

$$i_2(t) = \sqrt{2}\,I^+ \cos\!\left(\varphi + \varphi_{\underline{I}^+} + \tfrac{2}{3}\pi\right)$$

$$i_3(t) = \sqrt{2}\,I^+ \cos\!\left(\varphi + \varphi_{\underline{I}^+} + \tfrac{4}{3}\pi\right)$$

Der jeweilige Momentanwert des jeweiligen Sollstromes basiert somit auf dem Betrag des Mitsystemsollstroms $I^+$, dem geschätzten Netzphasenwinkel $\varphi$ und dem Phasenwinkel des Sollstromes des Mitsystems $\varphi_I{}^+$. Der geschätzte Netzphasenwinkel $\varphi$ gibt dabei den jeweils aktuellen, absoluten Phasenwinkel der Netzspannung an, bezogen auf die erste Phase. Der Phasenwinkel der Mitsystemstromkomponente $\varphi_I{}^+$ gibt den Phasenwinkel des Stroms des Mitsystems in Bezug auf den Phasenwinkel $\varphi$ der Netzspannung an.

Wenn das Flag den Wert 1 annimmt (Flag = 1) wird von einem Netzfehler ausgegangen. Zu solchen Netzfehlern oder Netzstörungen gehört:

- der Verlust der Winkelstabilität,

- das Auftreten einer Inselnetzbildung,

- das Auftreten eines drei-phasigen Kurzschlusses, und

- das Auftreten eines zwei-poligen Kurzschlusses.

Weitere Ausführungen zu der Art solcher Netzstörungen finden sich auch in der bereits genannten Offenlegungsschrift DE 10 2009 031 017 A1. Das Auftreten solcher Netzfehler kann insbesondere auch dazu führen, dass erfasste Netzzustände, insbesondere der Phasenwinkel $\varphi$ und die Spannungshöhe U falsch erfasst wurden und/oder zur Orientierung für die einzuspeisenden Ströme schlecht geeignet oder ungeeignet sind. Die Berechnung in dem Entscheidungsblock 38 für den Fall, dass von einem Netzfehler ausgegangen wird, basiert somit - allgemein gesprochen - stärker auf in dem Berechnungsblock 42 ermittelten Größen, und damit stärker auf der vorgegebenen Frequenz $f_{set}$. Dies soll nur zur allgemeinen Erläuterung dienen und es wird insoweit vorsorglich darauf hingewiesen, dass Berechnungen des Berechnungsblocks 42 über die Bestimmung der Mitstromkomponente $\underline{I}^+$ und der Gegenstromkomponente $\underline{I}^-$ in den Entscheidungsblock 38 eingeht und ist insoweit auch für die Berechnung im Entscheidungsblock 38 ohne Annahme eines Netzfehlers von Relevanz.

Bei Annahme eines Netzfehlers (Flag = 1) wird nach Berechnung bzw. Bestimmung der Sollströme $i_1(t)$, $i_2(t)$ und $i_3(t)$ in den folgenden drei Schritten vorgeschlagen. Die nachfolgenden Berechnungsschritte - und auch die oben genannte Berechnung im Fall ohne Netzfehler - erfolgt für jeden Zeitpunkt, an dem für die drei Sollströme $i_1(t)$, $i_2(t)$ und $i_3(t)$ jeweils ein Momentanwert an den Toleranzbandblock 24 übergeben wird.

Im ersten Schritt wird für das Mitsystem und das Gegensystem jeweils eine cos-Komponente $\underline{I}^{+c}$ und $\underline{I}^{-c}$ sowie eine sin-Komponente $\underline{I}^{+s}$ bzw. $\underline{I}^{-s}$ wie folgt berechnet:

$$i^{+c} = \sqrt{2}\,I^+ \cos\!\left(\varphi + \varphi_{\underline{I}^+}\right)$$

$$i^{+s} = \sqrt{2}\,I^+ \sin\!\left(\varphi + \varphi_{\underline{I}^+}\right)$$

$$i^{-c} = \sqrt{2}\,I^- \cos\!\left(\varphi_{\underline{U}^-{}_{fset}} + \varphi_{\underline{I}^-}\right)$$

$$i^{-s} = \sqrt{2}\,(-I^{-})\sin(\varphi_{\underline{U}^{-}{}_{fset}} + \varphi_{\underline{I}^{-}})$$

In obigem Gleichungssystem des ersten Schrittes bezeichnet $\underline{I}^{+}$ den Betrag der Mitstromkomponente und entsprechend $\underline{I}^{-}$ den Betrag der Gegenstromkomponente. $\varphi_{I}{}^{+}$ bzw. $\varphi_{I}{}^{-}$ bezeichnet den Phasenwinkel des Mitsystems bzw. des Gegensystems. Diese Winkel werden gemäß der Struktur der Fig. 2 nicht ausdrücklich dem Entscheidungsblock 38 übergeben, sind aber inhärente Elemente der komplexen Mitstromkomponente $\underline{I}^{+}$ bzw. der komplexen Gegenstromkomponente $\underline{I}^{-}$. Der Phasenwinkel der Gegensystemkomponente der Spannung, wie in dem Berechnungsblock 42 bestimmt wird, was nachfolgend noch erläutert werden wird, wird dem Entscheidungsblock 38 unmittelbar übergeben.

Es ist zu beachten, dass in dem Berechnungsblock 42 eine Zerlegung der dreiphasigen Netzspannungen in eine Mitsystemkomponente und eine Gegensystemkomponente vorgenommen wird, nämlich basierend auf der grundsätzlich bekannten Methode der symmetrischen Komponenten. Diese Methode der symmetrischen Komponenten liegt auch der Bestimmung einer Mitsystemkomponente und einer Gegensystemkomponente des Stroms gemäß dem PQ-Steuerungsblock 40 zugrunde. Diese beiden Stromkomponenten werden als komplexe Werte dem Entscheidungsblock 38 übergeben. Während diese Zerlegung der Netzspannung gemäß dem Berechnungsblock 42 im Idealfall eine Darstellung des Istzustandes der Netzspannungen darstellt, beinhaltet die Aufteilung in Mit- und Gegensystem für den Strom im PQ-Steuerungsblock 40 eine Darstellung des gewünschten einzuspeisenden Stroms bzw. in Vorbereitung auf den gewünschten einzuspeisenden Strom. So kann diese Darstellung von Mit- und Gegensystem für den Strom beispielsweise eine gewünschte Phasenverschiebung des Stroms relativ zur Spannung beinhalten, um einen gewünschten Blindleistungsanteil einzuspeisen.

Aus den so berechneten cos- und sin-Komponenten für das Mitsystem als auch für das Gegensystem $\underline{I}^{+c}$, $\underline{I}^{+s}$, $\underline{I}^{-c}$, $\underline{I}^{-s}$ wird nun ein Hilfsstromwert $i^{*}$ und ein Hilfswinkelwert $\varphi^{*}$ im zweiten Schritt wie folgt berechnet:

$$i^{*} = \sqrt{(i^{+c} + i^{-c})^{2} + (i^{+s} + i^{-s})^{2}}$$

$$\varphi^{*} = \arctan\left[\frac{i^{+s} + i^{-s}}{i^{+c} + i^{-c}}\right]$$

Aus dem Hilfsstromwert $i^{*}$ und dem Hilfswinkelwert $\varphi^{*}$ wird schließlich im dritten Schritt für jeden der Sollströme $i_{1}(t)$, $i_{2}(t)$ und $i_{3}(t)$ jeweils ein Wert für den betreffenden Zeitpunkt wie folgt berechnet.

$$i_{1}(t) = i^{*}\cos(\varphi^{*})$$

$$i_{2}(t) = i^{*}\cos(\varphi^{*} + \tfrac{2}{3}\pi)$$

$$i_{3}(t) = i^{*}\cos(\varphi^{*} + \tfrac{4}{3}\pi)$$

Es ist zu beachten, dass in diesem dritten Schritt drei einzelne Werte für die drei Sollströme $i_{1}(t)$, $i_{2}(t)$ und $i_{3}(t)$ berechnet werden. Dies erfolgt für jeden Berechnungszeitpunkt, also mehrfach für jede Periodendauer. Es ist weiter zu beachten, dass sich in jedem Zeitpunkt der Hilfsstromwert $i^{*}$ und der Hilfswinkelwert $\varphi^{*}$ verändern. Je nach Veränderung dieser Werte muss daher das Ergebnis der Berechnung dieses Schritts 3 nicht zu einem symmetrischen dreiphasigen Stromsystem führen, obwohl sich die drei Gleichungen der Berechnung des Schritts 3 nur in einem Winkeloffset von 2/3 $\pi$ bzw. 4/3 $\pi$ unterscheiden. Es ist also gleichwohl eine unsymmetrische Vorgabe der drei Ströme und damit unsymmetrische Einspeisung genauso möglich wie eine symmetrische Einspeisung. Dasselbe gilt im Übrigen auch sinngemäß für die oben dargestellte Berechnung der Sollströme $i_{1}(t)$, $i_{2}(t)$ und $i_{3}(t)$ in dem Entscheidungsblock 38, wenn nicht von einem Netzfehler ausgegangen wird, wenn also Flag = 0 gilt.

Fig. 3 zeigt Details des Berechnungsblocks 42 der in Fig. 2 gezeigten Gesamtstruktur. Demnach werden die gemessenen Netzspannungen $u_1$ (t), $u_2$ (t) und $u_3$(t) erfasst und daraus in dem als Half-Cycle-DFT bezeichneten Transformationsblock 50 in komplexe Spannungen $\underline{U}_1$, $\underline{U}_2$ und $\underline{U}_3$ transformiert bzw. umgerechnet. Diese komplexen Spannungen $\underline{U}_1$, $\underline{U}_2$ und $\underline{U}_3$ sind im Idealfall nur eine andere Darstellung für die gemessenen Spannungen $u_1$ (t), $u_2$ (t) und $u_3$ (t) und setzen einen sinusförmigen Verlauf mit fester Frequenz voraus.

Die drei komplexen Spannungen $\underline{U}_1$, $\underline{U}_2$ und $\underline{U}_3$ definieren somit ein dreiphasiges Spannungssystem, das aber unsymmetrisch sein kann. Entsprechend erfolgt eine Zerlegung dieses dreiphasigen Systems in eine Mitsystemkomponente und eine Gegensystemkomponente basierend auf der Methode der symmetrischen Komponenten. Die Mitsystemkomponente, nämlich dessen Betrag $U^+_{fset}$ und dessen Phase $\phi_U{}^+_{fset}$ wird in dem Mitsystemtransformationsblock 52 berechnet, und die Gegensystemkomponente, nämlich dessen Betrag $U^-_{fset}$ und dessen Phase $\phi_U{}^+_{fset}$ wird in dem Gegensystemtransformationsblock 54 berechnet. Sowohl der Half-Cycle-DFT-Berechnungsblock 50, der auch einfach als DFT-Transformationsblock bezeichnet werden kann, als auch der Mitsystemtransformationsblock 52 und der Gegensystemtransformationsblock 54 verwenden für ihre Berechnung eine gesetzte, von außen eingegebene Frrquenz $f_{set}$ bzw. den daraus berechneten Winkel $\phi_{fset}$. Der vorgegebene bzw. festgesetzte Winkel $\phi_{fset}$ ergibt sich durch Integration der vorgegebenen bzw. gesetzten Frequenz $f_{set}$ in dem Integrationsblock 56.

Die Berechnung eines Mitsystems, das auch als Mitsystemkomponente bezeichnet werden kann und eines Gegensystems, das auch als Gegensystemkomponente bezeichnet werden kann, ist grundsätzlich aus der Theorie der Methode der symmetrischen Komponenten bekannt. Dabei wir ein unsymmetrisches dreiphasiges System von sogenannten Phasoren in Mitsystem, Gegensystem und Nullsystem aufgeteilt. Das Mitsystem besitzt die gleiche Umlaufrichtung wie das zugrunde liegende dreiphasige System wohingegen das Gegensystem eine gegenläufige Richtung zu diesem ursprünglichen System aufweist. Das Mitsystem für sich gesehen und auch das Gegensystem für sich gesehen, sind jeweils in sich symmetrisch. Das Nullsystem bezeichnet ein System, bei dem alle Phasoren die gleiche Richtung und die gleiche Länge aufweisen. Dieses Nullsystem gleicht eine etwaige Abweichung von Null der Addition des ursprünglichen Systems aus. Im vorliegenden Fall wird aber - was auch dadurch begründet ist, dass ein Nullleiter nicht vorliegt bzw. nicht berücksichtigt wird - ein Nullsystem nicht betrachtet und damit auch nicht berechnet, sondern nur das Mitsystem bzw. die Mitsystemkomponente und das Gegensystem bzw. die Gegensystemkomponente.

Die Berechnung eines Mitsystems und eines Gegensystems aus einem dreiphasigen, unsymmetrischen System ist dem Fachmann aus Lehrbüchern bekannt und wird insoweit hier nicht näher erläutert.

Der Berechnung der komplexen Spannungswerte $\underline{U}_1$, $\underline{U}_2$ und $\underline{U}_3$, liegt das dem Grunde nach bekannte Verfahren einer diskreten Foriertransformation, kurz als DFT bezeichnet, zugrunde. Bei einer diskreten Foriertransformation wird ein periodisches Signal als Superposition, also Überlagerung eines Gleichanteils, einer Grundschwingung und ihrer Oberschwingung in eineindeutiger, d.h. umkehrbarer Weise beschrieben. Im einfachsten Fall liegt weder ein Gleichanteil noch eine Oberschwingung vor bzw. können solche Anteile vernachlässigt werden. In diesem Fall fallen die entsprechenden beschreibenden Komponenten weg und eine Beschreibung es Signals nach Betrag, Phase und Frequenz wird ausschließlich verwendet. Um eine solche diskrete Foriertransformation durchzuführen, ist eine Periodendauer des periodischen Signals zu erfassen. Liegt ein sinusförmiges Signal mit einer Frequenz von 50 Hz vor, wie das bei der elektrischen Spannung im europäischen Verbundnetz der Fall ist - sinngemäß ist dies auf ein 60 Hz-Netz wie beispielsweise in den U.S.A. übertragbar - so beträgt eine Periodenlänge $T\ \frac{1}{f} = \frac{1}{50Hz} = 20ms$. Für eine diskrete Fouriertransformation des Spannungssignals eines 50 Hz-Spannungsnetzes werden also zumindest 20ms benötigt. Diese Zeit kann sehr lang sein, wenn im Netz auf Netzfehler schnell reagiert werden soll.

Es wird nun vorgeschlagen, nur eine halbe Periodenlänge des zu transformierenden Signals zu verwenden. Vorliegend wird also von jedem Spannungssignal $U_1$ (t), $U_2$ (t) und $U_3$ (t) jeweils nur eine halbe Periodenlänge berücksichtig. Das Ergebnis dieser modifizierten DFT, die auch als Half-Cycle-DFT hier bezeichnet wird, wird in dem Transformationsblock 50 berechnet und ausgegeben. Entsprechend ergibt sich für jede der drei Spannungsphasen ein Spannungsbetrag $U_i$ und eine Spannungsphase $\phi_{Ui}$. Die Variable "i" kann den Wert 1, 2 oder 3 annehmen und bezeichnet entsprechend die 1., 2. bzw. 3. Phase.

$$U_i^c = K_c \int_0^{\frac{1}{2_{fset}}} u_i(t) * \cos(2\pi_{fset} * t)\,dt$$

$$U_i^s = K_s - \int_0^{\frac{1}{2}_{fset}} u_i(t) * \sin(2\pi_{fset} * t) dt$$

$$\varphi_{\underline{U}_i} = \arctan\left(\frac{U_i^s}{U_i^c}\right)$$

$$U_i = \sqrt{(U_i^c)^2 + (U_i^s)^2}$$

Diese Berechnung wird für jede Phase berechnet, was durch den Index i angezeigt wird, der somit je nach Phase den Wert 1, 2 oder 3 annimmt. Somit wird zunächst ein erster Spannungsanteil $U_i'$ und ein zweiter Spannungsanteil $U_i''$ mittels des jeweils angegebenen Integrals berechnet. Es wird somit nämlich ein bestimmtes Integral von 0 bis $\frac{1}{2fset}$

berechnet. Dabei ist $\frac{1}{2fset} = \frac{1}{2}T$ , und somit wird das bestimmte Integral über eine halbe Periodendauer T berechnet. Für den ersten Spannungsanteil $U_i^{c*}$ ist noch ein Skalierungsfaktor $K_c$, und für den zweiten Spannungsanteil $U_i^s$ ist entsprechend ein Skalierungsfaktor $K_s$ berücksichtigen, wobei diese beiden Skalierungsfaktoren auch identisch sein können. Die beiden dargestellten Integrale können auf unterschiedliche Weise berechnet werden. Beispielsweise kommt auch in Betracht, eine diskrete Berechnung durchzuführen, insbesondere unter Berücksichtigung, dass die jeweiligen Spannungswerte $u_i(t)$ in einem Prozessrechner und damit auch in dem Transformationsblock 50 als Abtastwerte vorliegen. Die konkrete Umsetzung einer solchen oder ähnlichen Integralbildung beispielsweise auf einem Prozessrechner ist dem Fachmann geläufig. Im Übrigen wird darauf hingewiesen, dass der erste Spannungsanteil $U_i^c$ und der zweite Spannungsanteil $U_i^s$ als Imaginärteil und Realteil interpretiert werden könnten.

Bei der Berechnung der beiden Integrale für den ersten und zweiten Spannungsanteil ist zu beachten, dass jeweils die bis zu einer halben Periodendauer zurückliegenden Spannungswerte von $u_i(t)$ berücksichtigt werden. Im Falle eines sinusförmigen Spannungssignales mit einer Frequenz von 50 Hz - um ein praktisches Beispiel zu nennen - ergibt sich eine halbe Periodendauer zu 10 ms. Demnach werden Änderungen etwa nach 10 ms durch diese modifizierte DFT bzw. Half-Cycle-DFT vollständig erfasst. Die ersten Auswirkungen haben solche Änderungen aber bereits bei ihrem Auftreten. Die in den Transformationsblock 50 der Fig. 3 vorgeschlagene Transformation bzw. Berechnung der komplexen Spannungswerte, nämlich $\underline{U}_1$, $\underline{U}_2$ und $\underline{U}_3$ kann somit sehr schnell durchgeführt werden. Die Abtastfrequenz, die der Transformationsblock 50 verwendet, kann beispielsweise 5 kHz betragen, und es ergibt sich somit ein Berechnungswert alle 200 μs. Diese 200 ps ist somit die Dauer, nach der - in diesem Beispiel - die erste Auswirkung einer Änderung der Netzspannung sich in den berechneten komplexen Spannungswerten wiederspiegelt.

Entsprechend ergibt sich auch nach etwa dieser Zeit eine Auswirkung bei den Werten des Mit- und Gegensystems, also für $U^+_{fset}$, $\phi_{Ufset}$, $U^-_{fset}$ und $\phi_{U^-fset}$ einstellen.

Fig. 2 zeigt die weitere Verwendung der im Berechnungsblock 42 berechneten Komponenten für das Mitsystem und das Gegensystem wie folgt.

Der Zustandsschalter 36 wird abhängig von einem Fehlersignal, nämlich dem Flag geschaltet. Wenn Flag=0 gilt, also wenn davon ausgegangen wird, dass kein Netzfehler vorliegt, ist der Zustandsschalter 36 so geschaltet, dass der im Transformationsblock 32 berechnete Netzphasenwinkel $\phi_N$ als Eingangsgröße für den Zustandsbeobachterblock 34 verwendet wird.

Wird jedoch von einem Netzfehler ausgegangen, ist Flag=1 und der Zustandsschalter 36 schaltet so um, dass der Phasenwinkel $\phi_U^+{}_{fset}$, also der berechnete Phasenwinkel des Mitsystems den Eingang, nämlich den Eingangswinkel, des Zustandsbeobachterblocks 34 bildet. In diesem Fall bildet also der Phasenwinkel des Mitsystems die Basis für den Zustandsbeobachterblock 34. Dies kann auch so interpretiert werden, dass jedenfalls hinsichtlich des Phasenwinkels auf das Mitsystem referenziert wird.

Der Phasenwinkel des Gegensystems, $\phi_U^-{}_{fset}$ bildet ein Eingangssignal des Entscheidungsblockes 38. Dieser Winkel wird in dem Entscheidungsblock 38 für den Fall benötigt, dass von einem Netzfehler ausgegangen wird, wie dies bereits oben im Zusammenhang mit den Berechnungen bzw. Vorgängen im Entscheidungsblock 38 erläutert wurde. Insoweit verbindet der Entscheidungsblock 38 bei Annahme eines Netzfehlers die Phasenwinkel des Mitsystems und Gegensystems und berücksichtigt insoweit eine Unsymmetrie der Netzspannungen. Wie erläutert wird in diesem Fall der Phasenwinkel des Gegensystems $\phi_{\underline{U}}{}^{-}{}_{fset}$ direkt und der Phasenwinkel des Mitsystems $\phi_{\underline{U}}{}^{+}{}_{fset}$ indirekt über die Zustandsbeobachtung des Zustandsbeobachtungsblocks 34.

Die Spannungsbeträge des Mitsystems $U^{+}{}_{fset}$ und des Gegensystems $U^{-}{}_{fset}$, die im Berechnungsblock 42 berechnet wurden, werden im PQ-Steuerungsblock 40 verwendet. Im PQ-Steuerungsblock wird der grundsätzlich gewünschte einzuspeisende Strom bestimmt, nämlich hinsichtlich aller drei einzuspeisenden Ströme. Die Bestimmung, die auch als Vorgabe bezeichnet werden kann, gibt entsprechend jeweils einen komplexen Mitsystemstrom $\underline{I}^{+}$ und einen komplexen Gegensystemstrom $\underline{I}^{-}$ aus. Es wird somit zumindest von der Möglichkeit ausgegangen, dass der dreiphasige Strom unsymmetrisch ist und deshalb die Beschreibung gemäß der Methode der symmetrischen Komponenten verwendet wird. Der PQ-Steuerungsblock 40 verwendet zwar die Spannungsamplituden $U^{+}{}_{fset}$ und $U^{-}{}_{fset}$, die im Berechnungsblock 42 erstellt und ausgestellt wurden, führt aber für die Berechnung der Mitsystem- und Gegensystemstromkomponenten $\underline{I}^{+}$ und $\underline{I}^{-}$ eine eigene Berechnung, nämlich Zerlegung in Mit- und Gegensystem durch.

Die Berechnung dieses vorgegebenen Stroms kann verschiedene Vorgaben berücksichtigen, nämlich den einzuspeisenden Wirkleistungsanteil, insbesondere den Wirkleistungsanteil des Mitsystems $P^{+}$ und den einzuspeisende Blindleistungsanteil, nämlich insbesondere den Wirkleistungsanteil des Mitsystems $Q^{+}$. Weiterhin kann ein Verhältnis der Beträge des Stromes des Gegensystems $I^{-}$ zu dem Strom des Mitsystems $I^{+}$, nämlich $I^{-}/I^{+}$ berücksichtigt werden. Dieser Quotient ist ein Maß für den Unsymmetriegrad des dreiphasigen Systems, das durch diese Mitsystemkomponente und Gegensystemkoponente beschrieben wird.

Weiterhin berücksichtigt der PQ-Steuerungsblock 40 Fehlerkriterien, aus denen sich ein Netzfehler ableiten lässt und generiert das bereits erläuterte Flag, das den Wert 0 annimmt, wenn davon ausgegangen wird, dass kein Netzfehler vorliegt und dass den Wert 1 annimmt, wenn von dem Vorliegen eines Netzfehlers ausgegangen wird. Solche Fehlerkriterien können beispielsweise eine starke Frequenzänderung, der Ausfall einer Phase oder auch der Ausfall bzw. starke Reduzierung in der Amplitude aller Phasen sein. Das Fehlerkriterium kann aber auch ein direktes Signal sein, das bereits das Ergebnis einer externen Auswertung ist oder das von einem Netzbetreiber übergeben wird und gegebenenfalls hierbei auch die Art des Netzfehlers spezifiziert.

Der PQ-Block kann auf unterschiedliche Arten und Weisen ausgeführt sein. Er kann z.B. $U^{+}{}_{fset}$ und $U^{-}{}_{fset}$ und U gleichzeitig berücksichtigen. Beispielsweise müssen $U^{+}{}_{fset}$ und $U^{-}{}_{fset}$, die im Grunde synthetische Werte sind, U, das für die reale Spannung steht, nicht korrekt wiedergeben. So können $U^{+}{}_{fset}$ und $U^{-}{}_{fset}$ bspw. einen Frequenzfehler haben. Abhängig von der konkreten Situation wird die eine oder die andere oder beide Werte verwendet.

**Patentansprüche**

1. Verfahren zum Einspeisen elektrischen Stroms in ein elektrisches, dreiphasiges Netz mit einer ersten, zweiten und dritten Phase mit einer ersten, zweiten und dritten Spannung mit einer Netzfrequenz, wobei elektrische Energie mittels einer Windenergieanlage erzeugt und in das elektrische Netz eingespeist wird umfassend die Schritte:

   - Messen der ersten, zweiten und dritten Spannung des dreiphasigen Netzes,
   - Transformieren der ersten, zweiten und dritten Spannung in ein Spannungs-Mitsystem und ein Spannungs-Gegensystem nach der Methode der Symmetrischen Komponenten,
   - Berechnen eines ersten, zweiten und dritten, Sollstroms zum Einspeisen in die erste, zweite bzw. dritte Phase des Netzes,
   - wobei die Berechnung des ersten, zweiten und dritten Sollstroms in Abhängigkeit wenigstens eines Wertes des Spannungs-Mitsystems und/oder des Spannungs-Gegensystems durchgeführt wird,
   - wobei mittels eines Frequenzwechselrichters elektrische Ströme entsprechend dem ersten, zweiten und dritten Sollstrom zum Einspeisen in das dreiphasige Netz erzeugt und eingespeist werden, wobei
   - das Transformieren der ersten, zweiten und dritten Spannung in ein Spannungs-Mitsystem und ein Spannungs-Gegensystem eine Transformation der ersten, zweiten und dritten Spannung mittels einer diskreten Fouriertransformation (DFT) umfasst, wobei die diskrete Fouriertransformation nur über eine halbe Periodendauer durchgeführt wird.

2. Verfahren nach einem der vorstehenden Ansprüche, **dadurch gekennzeichnet, dass** zum Berechnen der Sollströme ein Berechnungsphasenwinkel ($\varphi$) zugrundegelegt wird und der Berechnungsphasenwinkel ($\varphi$) abhängig von einer Detektion eines Netzfehlers bestimmt wird, insbesondere unter Verwendung eines Bestimmungsfilters bzw. Filterblocks (34), wobei

- der Berechnungsphasenwinkel ($\varphi$) aus einem erfassten Phasenwinkel einer der Netzspannungen bestimmt wird, wenn kein Netzfehler detektiert wurde und/oder

- der Berechnungsphasenwinkel aus einem Phasenwinkel des Spannungs-Mitsystems bestimmt wird, insbesondere unter Verwendung einer vorgegebenen Netzfrequenz ($f_{set}$) bestimmt wird, wenn ein Netzfehler detektiert wurde.

3. Verfahren nach einem der vorstehenden Ansprüche, **dadurch gekennzeichnet, dass** für die Berechnung der Sollströme, insbesondere wenn ein Netzfehler detektiert wird, auf das Spannungs-Mitsystem, insbesondere auf den Phasenwinkel des Spannungs-Mitsystems referenziert wird.

4. Verfahren nach einem der vorstehenden Ansprüche, **dadurch gekennzeichnet, dass** das Transformieren der ersten, zweiten und dritten Spannung in ein Spannungs-Mitsystem und ein Spannungs-Gegensystem eine Transformation der ersten, zweiten und dritten Spannung mittels einer diskreten Fouriertransformation (DFT) umfasst, wobei die diskrete Fouriertransformation online durchgeführt wird.

5. Verfahren nach einem der vorstehenden Ansprüche, **dadurch gekennzeichnet, dass** das Transformieren der ersten, zweiten und dritten Spannung in ein Spannungs-Mitsystem und ein Spannungs-Gegensystem anstelle einer Messung der aktuellen Netzfrequenz eine vorbestimmte Frequenz verwendet.

6. Verfahren nach Anspruch 5, **dadurch gekennzeichnet, dass** als vorbestimmte Frequenz der Wert der Netzfrequenz eines zurückliegenden Messzeitpunktes, ein Nennwert der Netzfrequenz und/oder ein extern vorgegebener Wert verwendet wird.

7. Verfahren nach einem der vorstehenden Ansprüche, **dadurch gekennzeichnet, dass** die Sollströme nach der Methode der symmetrischen Komponenten über ein Strom-Mitsystem und ein Strom-Gegensystem vorgegeben werden, insbesondere dass das Mitsystem durch eine komplexe Mitsystemstromkomponente nach Betrag und Phase und das Gegensystem durch eine komplexe Gegensystemstromkomponente nach Betrag und Phase berücksichtigt wird.

8. Verfahren nach Anspruch 7, **dadurch gekennzeichnet, dass** die Sollströme abhängig von dem Strom-Mitsystem bzw. der Mitsystemstromkomponente und bei Annahme eines Netzfehlers zusätzlich abhängig von dem Strom-Gegensystem bzw. der Gegensystemstromkomponente berechnet werden.

9. Verfahren nach einem der Ansprüche 7 oder 8, **dadurch gekennzeichnet, dass** das Strom-Mitsystem bzw. die Mitsystemstromkomponente und das Strom-Gegensystem bzw. die Gegensystemstromkomponente abhängig von einer Vorgabe eines Wirkleistungsanteils des Mitsystems, einer Vorgabe eines Blindleistungsanteils des Mitsystems und/oder einer Vorgabe eines Quotienten des Betrags der Gegensystemstromkomponente zum Betrag der Mitsystemstromkomponente bestimmt wird.

10. Verfahren nach einem der Ansprüche 7 - 9, **dadurch gekennzeichnet, dass** die Gegensystemstromkomponente unabhängig von der Mitsystemstromkomponente eingestellt und/oder variiert wird.

11. Verfahren nach einem der vorstehenden Ansprüche, **dadurch gekennzeichnet, dass** das Verfahren online durchgeführt wird, insbesondere, dass alle Verfahrensschritte online durchgeführt werden.

12. Windenergieanlage, die zum Durchführen eines Verfahrens nach einem der vorstehenden Ansprüche zum Einspeisen elektrischen Stroms ausgebildet ist.

13. Windpark mit mehreren Windenergieanlagen, mit wenigstens einer Windenergieanlage nach Anspruch 12.

**Claims**

1. A method of feeding electric current into an electric three-phase network comprising a first, second and third phase with a first, second and third voltage at a network frequency, wherein electric energy is produced by means of a wind power installation and fed into the electric network comprising the steps:

- measuring the first, second and third voltage of the three-phase network,

- transforming the first, second and third voltage into a voltage positive sequence and a voltage negative sequence using the method of symmetrical components,
- calculating a first, second and third target current for feeding into the first, second and third phase respectively of the network,
- wherein calculation of the first, second and third target current is effected in dependence on at least one value of the voltage positive sequence and/or the voltage negative sequence,
- wherein electric currents are produced by means of a frequency converter corresponding to the first, second and third target currents for feeding into the three-phase voltage network and are fed thereinto, wherein
- the transformation of the first, second and voltage into a voltage positive sequence and a voltage negative sequence includes transformation of the first, second and third voltage by means of a discrete Fourier transformation (DFT), wherein the discrete Fourier transformation is effected in particular online and/or only over half a period duration.

2. A method according to one of the preceding claims **characterised in that** a calculation phase angle ($\varphi$) forms the basis for calculation of the target currents and the calculation phase angle ($\varphi$) is determined in dependence on detection of a network fault, in particular using a determination filter or filter block (34), wherein

- the calculation phase angle ($\varphi$) is determined from a detected phase angle of one of the network voltages if no network fault was detected and/or
- the calculation phase angle is determined from a phase angle of the voltage positive sequence, in particular using a predetermined network frequency ($f_{set}$) if a network fault was detected.

3. A method according to one of the preceding claims **characterised in that** for calculation of the target currents, in particular if a network fault is detected, reference is made to the voltage positive sequence, in particular to the phase angle of the voltage positive sequence.

4. A method according to one of the preceding claims **characterised in that** transformation of the first, second and voltage into a voltage positive sequence and a voltage negative sequence includes transformation of the first, second and third voltage by means of a discrete Fourier transformation (DFT), wherein the discrete Fourier transformation is effected online.

5. A method according to one of the preceding claims **characterised in that** transformation of the first, second and third voltage into a voltage positive sequence and a voltage negative sequence uses a predetermined frequency instead of measurement of the currently prevailing network frequency.

6. A method according to claim 5 **characterised in that** the value of the network frequency of an earlier measurement time, a nominal value of the network frequency and/or an externally predetermined value is used as the predetermined frequency.

7. A method according to one of the preceding claims **characterised in that** the target currents are predetermined using the method of symmetrical components by way of a current positive sequence and a current negative sequence, and in particular the positive sequence is taken into consideration by a complex positive sequence current component in respect of magnitude and phase and the negative sequence is taken into consideration by a complex negative sequence current component in respect of magnitude and phase.

8. A method according to claim 7 **characterised in that** the target currents are calculated in dependence on the current positive sequence or the positive sequence current component and upon the assumption of a network fault in addition in dependence on the current negative sequence or the negative sequence current component.

9. A method according to one of claim 7 or 8 **characterised in that** the current positive sequence or the positive sequence current component and the current negative sequence or the negative sequence current component is determined in dependence on a presetting of an active power component of the positive sequence, a presetting of a reactive power component of the positive sequence and/or a presetting of a quotient of the magnitude of the negative sequence current component in relation to the magnitude of the positive sequence current component.

10. A method according to one of claim 7 - 9 **characterised in that** the negative sequence current component is adjusted and/or varied independently of said positive sequence current component.

**11.** A method according to one of the preceding claims **characterised in that** the method is carried out online, in particular all method steps are carried out online.

**12.** A wind power installation designed for carrying out a method according to one of the preceding claims for feeding electric current.

**13.** A wind park comprising a plurality of wind power installations with at least one wind power installation according to claim 12.

**Revendications**

**1.** Procédé servant à injecter du courant électrique dans un réseau électrique triphasé avec une première, deuxième et troisième phase en une première, deuxième et troisième tension avec une fréquence de réseau, dans lequel de l'énergie électrique est générée au moyen d'une éolienne et est injectée dans le réseau électrique, comprenant les étapes :

- de mesure de la première, deuxième et troisième tension du réseau triphasé,
- de transformation de la première, deuxième et troisième tension dans un système direct de tension et un système inverse de tension selon la méthode des composants symétriques,
- de calcul d'un premier, deuxième et troisième courant théorique destiné à être injecté dans la première, deuxième ou troisième phase du réseau,
- dans lequel le calcul du premier, deuxième et troisième courant théorique est effectué en fonction d'au moins une valeur du système direct de tension et/ou du système inverse de tension,
- dans lequel des courants électriques sont générés et injectés conformément au premier, deuxième et troisième courant théorique destiné à être injecté dans le réseau triphasé au moyen d'un convertisseur de fréquence, dans lequel
- la transformation de la première, deuxième et troisième tension en un système direct de tension et un système inverse de tension comprend une transformation de la première, deuxième et troisième tension au moyen d'une transformation de Fourier discrète (TFD), dans lequel la transformation de Fourier discrète est effectuée seulement sur une demi-durée de période.

**2.** Procédé selon l'une des revendications précédentes, **caractérisé en ce que** le calcul des courants théoriques se base sur un angle de phase de calcul ($\varphi$), et l'angle de phase de calcul ($\varphi$) est défini en fonction d'une détection d'une erreur de réseau, en particulier en utilisant un filtre de définition ou un bloc filtrant (34), dans lequel

- l'angle de phase de calcul ($\varphi$) est défini à partir d'un angle de phase détecté d'une des tensions de réseau quand aucune erreur de réseau n'a été détectée et/ou
- l'angle de phase de calcul est défini à partir d'un angle de phase du système direct de tension, en particulier en utilisant une fréquence de réseau prédéterminée ($f_{set}$) quand une erreur de réseau a été détectée.

**3.** Procédé selon l'une quelconque des revendications précédentes, **caractérisé en ce que** pour le calcul des courants théoriques, en particulier quand une erreur de réseau est détectée, il est fait référence au système direct de tension, en particulier à l'angle de phase du système direct de tension.

**4.** Procédé selon l'une quelconque des revendications précédentes, **caractérisé en ce que** la transformation de la première, deuxième et troisième tension en un système direct de tension et un système inverse de tension comprend une transformation de la première, deuxième et troisième tension au moyen d'une transformation de Fourier discrète (TFD), dans lequel la transformation de Fourier discrète est effectuée en ligne.

**5.** Procédé selon l'une quelconque des revendications précédentes, **caractérisé en ce que** la transformation de la première, deuxième et troisième tension en un système direct de tension et en un système inverse de tension utilise une fréquence prédéfinie au lieu d'une mesure de la fréquence de réseau instantanée.

**6.** Procédé selon la revendication 5, **caractérisé en ce que** la valeur de la fréquence de réseau d'un moment de mesure antérieur, une valeur nominale de la fréquence de réseau et/ou une valeur prédéterminée de manière externe sont utilisées en tant que fréquence prédéfinie.

**7.** Procédé selon l'une quelconque des revendications précédentes, **caractérisé en ce que** les courants théoriques sont prédéterminés selon la méthode des composants symétriques par l'intermédiaire d'un système direct de courant et d'un système inverse de courant, en particulier que le système direct est pris en compte par un composant de courant de système direct complexe selon la valeur et la phase et le système inverse est pris en compte par un composant de courant de système inverse complexe selon la valeur et la phase.

**8.** Procédé selon la revendication 7, **caractérisé en ce que** les courants théoriques sont calculés en fonction du système direct de courant ou du composant de courant de système direct, en cas de supposition d'une erreur de réseau, en supplément en fonction du système inverse de courant ou du composant de courant de système inverse.

**9.** Procédé selon l'une quelconque des revendications 7 ou 8, **caractérisé en ce que** le système direct de courant ou le composant de courant de système direct et le système inverse de courant ou le composant de courant de système inverse sont définis en fonction d'une prédétermination d'une fraction de puissance active du système direct, d'une prédétermination d'une fraction de puissance réactive du système direct et/ou d'une prédétermination d'un quotient entre la valeur du composant de courant de système inverse et la valeur du composant de courant de système direct.

**10.** Procédé selon l'une quelconque des revendications 7 à 9, **caractérisé en ce que** le composant de courant de système inverse est réglé et/ou varie en fonction du composant de courant de système direct.

**11.** Procédé selon l'une quelconque des revendications précédentes, **caractérisé en ce que** le procédé est effectué en ligne, en particulier que toutes les étapes de procédé sont effectuées en ligne.

**12.** Eolienne, qui est réalisée pour effectuer un procédé selon l'une quelconque des revendications précédentes pour injecter du courant électrique.

**13.** Parc éolien avec plusieurs éoliennes, avec au moins une éolienne selon la revendication 12.

Gondel

Nabe/Spinner

Windenergieanlage

Rotorblatt

Turm

**Fig. 1**

**Fig. 2**

Block A

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10022974 A1
- DE 10119624 A1
- WO 02086315 A1
- DE 19756777 A1

- WO 2010028689 A1
- DE 102007005165 A1
- DE 102009031017 A1

**In der Beschreibung aufgeführte Nicht-Patentliteratur**

- Dual reference frame scheme for distributed generation grid-connected inverter under unbalanced grid voltage conditions. **SONG XIAN-WEN et al.** POWER ELECTRONICS SPECIALISTS CONFERENCE, 2008. PESC 2008. IEEE. IEEE, 15. Juni 2008, 4552-4555